# DEMANDE DE BREVET EUROPEEN

(11) **EP 4 632 871 A1**
(43) Date de publication de la demande: **15.10.2025**
(21) Numéro de dépôt: 24305588.6
(22) Date de dépôt: 11.04.2024
(51) Int. Cl.: H01M 10/48, H01M 10/613, H01M 10/6568

(54) **DISPOSITIF DE BATTERIE À CELLULES IMMERGÉES DANS UN LIQUIDE DE REFROIDISSEMENT**

(71) Demandeur: Automotive Cells Company SE, 33520 Bruges (FR)
(72) Inventeur: FRESNEAU, Aymeric, 33400 TALENCE (FR); MARATHE, Dimitri, 33310 LORMONT (FR); FAT-CHEUNG, Adrien, 33520 BRUGES (FR); CHAUVEAU, Pierre, 33520 BRUGES (FR)
(74) Mandataire: Lavoix

(57) **Abrégé**

Le dispositif de batterie (10) comporte au moins un module (12) de cellules (13), et un circuit de refroidissement (14) destiné faire circuler un fluide de refroidissement au contact des cellules (13), le dispositif de batterie (10) comprenant un dispositif (30) de surveillance des cellules (13). Le dispositif de surveillance (30) comporte au moins un capteur (22, 24, 26) de propriété du fluide de refroidissement.

## Description

La présente invention concerne un dispositif de batterie à cellules immergées dans un liquide de refroidissement.

On connait déjà, dans l'état de la technique, un dispositif de batterie comportant une pluralité de cellules de batterie et un circuit de refroidissement destiné faire circuler un liquide de refroidissement au contact des cellules de batterie.

Habituellement, le vieillissement des cellules est évalué à l'aide de capteurs de température mesurant la température de ces cellules, ou à l'aide de capteurs de pression mesurant le gonflement de ces cellules.

L'invention a notamment pour but d'améliorer la surveillance du vieillissement des cellules, notamment en améliorant la précision et la fiabilité de cette surveillance.

A cet effet, l'invention a notamment pour objet un dispositif de batterie comportant au moins un module de cellules, et un circuit de refroidissement destiné faire circuler un fluide de refroidissement au contact des cellules, le dispositif de batterie comprenant un dispositif de surveillance des cellules, caractérisé en ce que le dispositif de surveillance comporte au moins un capteur de propriété du fluide de refroidissement.

Le dispositif selon l'invention permet de corréler l'évolution de paramètres physiques du liquide de refroidissement, tels que la pression, le flux, la température, etc., dans le cadre d'une batterie dont les cellules sont en immersion directe, avec le vieillissement des cellules. Ces nouveaux paramètres sont ainsi pris en compte dans la surveillance du vieillissement des cellules.

La surveillance pouvant ainsi bénéficier de davantage de paramètres est donc améliorée.

Un dispositif de batterie selon l'invention peut comporter en outre l'une ou plusieurs des caractéristiques suivantes, prises seules ou selon toutes combinaisons techniquement envisageables.
- L'au moins un capteur de propriété comporte, pour chaque module, un premier capteur de pression et/ou de flux agencé sur le circuit de refroidissement, en sortie du module correspondant.
- L'au moins un capteur de propriété comporte, pour chaque module, un second capteur de pression et/ou de flux agencé sur le circuit de refroidissement, en entrée du module correspondant.
- Le dispositif de surveillance est configuré pour prendre en compte une perte de charge dans chaque module, déterminée en utilisant le premier capteur correspondant.
- L'au moins un capteur de propriété comporte au moins un capteur de température mesurant la température du fluide.
- Le circuit de refroidissement comporte une pompe, l'au moins un capteur de propriété comprenant un capteur de puissance de la pompe et/ou de courant électrique consommé par la pompe.
- Le procédé utilise des mesures obtenues par l'au moins un capteur de propriété du fluide.
- Le procédé de surveillance utilise une mesure de perte de charge entre une entrée et une sortie de chaque module, notamment en comparant cette mesure avec une perte de charge de référence obtenue pour une cellule en début de vie.
- Le procédé de surveillance prend en compte l'impact de la température du fluide sur la perte de charge. Différents aspects et avantages de l'invention seront mis en lumière dans la description qui va suivre, donnée uniquement à titre d'exemple non limitatif et faite en se référant aux figures annexées, parmi lesquelles :
- la figure 1 représente schématiquement un dispositif de batterie selon un exemple de mode de réalisation de l'invention ;
- la figure 2 représente schématiquement un module de cellules du dispositif de la figure 1, en début de vie ;
- la figure 3 est une vue similaire à la figure 2 du module de cellules en fin de vie.

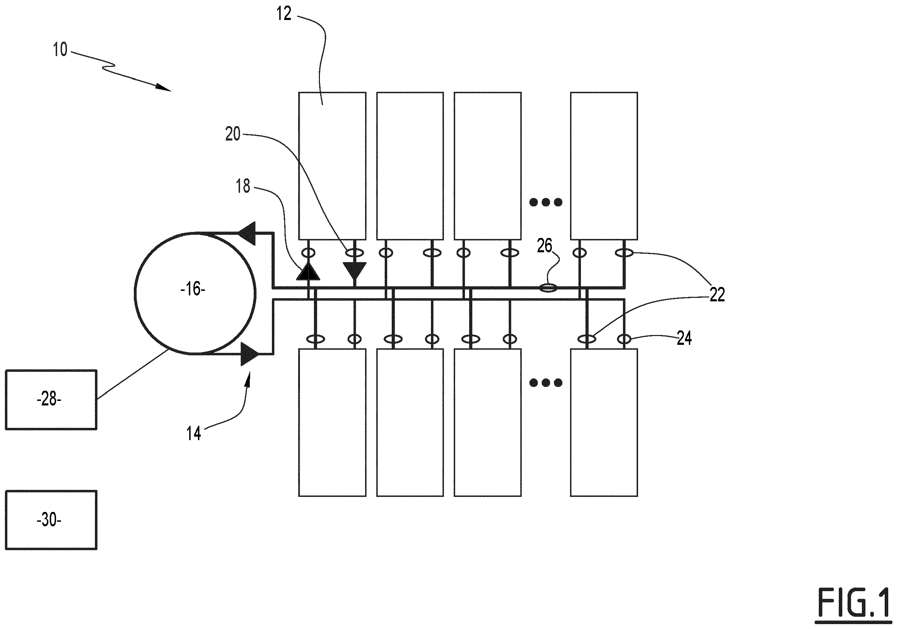

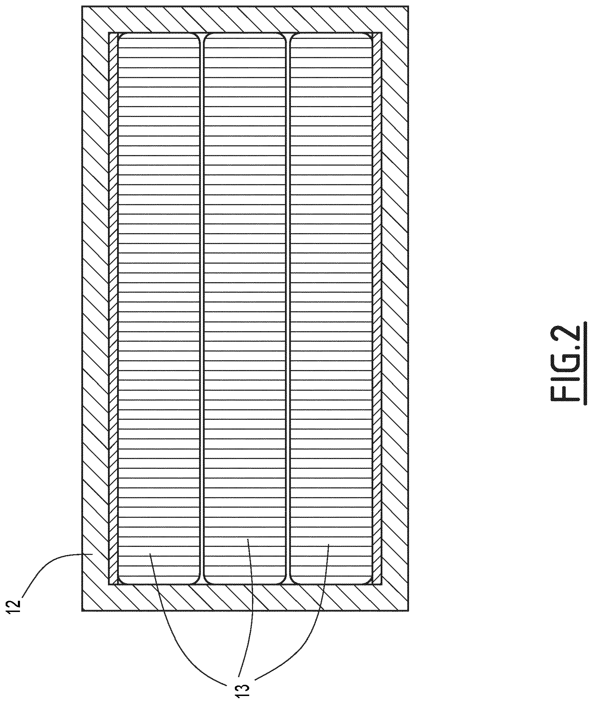

On a représenté, sur la figure 1, un dispositif de batterie 10, comportant une pluralité de modules 12 de cellules 13. Chaque module 12 comporte une pluralité de cellules 13 disposées parallèlement les unes des autres, comme cela est représenté schématiquement sur la figure 2.

Le dispositif de batterie 10 comporte également un circuit de refroidissement 14, configuré pour faire circuler un fluide de refroidissement au contact des cellules 12. Le circuit de refroidissement 14 comporte un dispositif de pompe 16 destiné à entrainer le fluide de refroidissement dans le circuit de refroidissement 14. Le dispositif de pompe 16 comporte de manière classique au moins une pompe et, de manière optionnelle, un radiateur, un vase d'expansion, un réchauffeur, et éventuellement d'autres éléments classiques.

Le circuit de refroidissement 14 comporte, pour chaque module 12, un conduit d'entrée 18 et un conduit de sortie 20.

Le circuit de refroidissement 14 est classique et ne sera donc pas décrit en détail. Le circuit de refroidissement 14 est par exemple formé par une pompe à chaleur.

L'invention prévoit la surveillance du vieillissement des modules 12 en utilisant des mesures faites sur le circuit de refroidissement 14, en prenant en compte les conséquences du vieillissement des modules 12 sur ces mesures. A cet effet, le dispositif de batterie 10 comporte au moins un capteur de propriété du fluide de refroidissement, destiné à mesurer au moins une propriété de ce fluide.

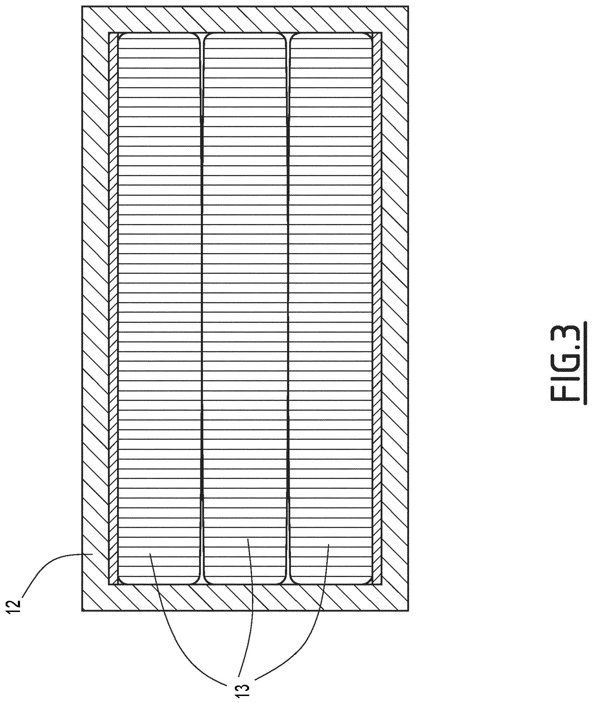

En particulier, comme on peut le voir sur la figure 2, en début de vie du module 12, la perte de charge du fluide de refroidissement entre l'entrée et la sortie du module 12 n'est pas influencée par le gonflement des cellules 13. En revanche, comme on peut le voir sur la figure 3, le gonflement des cellules 13 réduit les interstices entre ces cellules 13, si bien que ces gonflements sont un obstacle à la circulation du fluide de refroidissement.

Par conséquent, la perte de charge entre l'entrée et la sortie du module 12 augmente au cours du vieillissement des cellules 13.

Ainsi, dans un premier exemple, les capteurs de propriété comportent un premier capteur 22 de pression et/ou de flux en sortie de chaque module 12. Ces premiers capteurs 22 permettent de mesurer la pression du fluide en sortie de module.

La pression en entrée de module est généralement connue par ailleurs, ou en variante peut être déterminée par des seconds capteurs 24 de pression et/ou de flux disposés en entrée de chaque module 12.

Ces capteurs permettent de déterminer une perte de charge Δp, et par exemple la comparer avec une perte de charge de référence correspondant à la valeur de perte de charge en début de vie du module 12 correspondant. Cette valeur de perte de charge en début de vie est de préférence mesurée en début de vie, ou en variante estimée par tout moyen envisageable.

Il est à noter que, dans certains cas, la perte de charge dépend également de la température du fluide, car la viscosité de ce fluide varie en fonction de sa température. Ainsi, la perte de charge dépend du gonflement des cellules 13 et aussi de la température du fluide.

Afin de mesurer cette température, les capteurs de propriété comportent également de préférence au moins un capteur de température 26 mesurant la température du fluide. Un tel capteur de température 26 peut être disposé à un endroit ponctuel du circuit 14, ou en chaque entrée et/ou sortie de chaque module 12.

Le rapport entre la température et la viscosité du fluide dépend du fluide utilisé, et l'homme du métier saura ajuster la surveillance de la perte de charge Δp en fonction de la température.

Le module 12, de par sa conception et sa réalisation, présente une perte de charge Δp (delta de pression entrée/sortie) propre dépendant de divers paramètres, notamment le débit et la viscosité du fluide, cette viscosité étant elle-même influencée par la température du fluide et par le niveau de pression en entrée du module. Il est donc possible, par test ou par simulation, de déterminer une corrélation entre pertes de charge Δp et températures lorsque les autres paramètres (tels que la nature du fluide, la pression et le débit par exemple) sont connu.

On peut ainsi, sur cette base, prédéfinir des valeurs de perte de charge Δp en fonction de la température pour différents paramètres d'entrée, et ainsi connaitre la réponse "Normale" du module à un jeu de paramètres donné. Tout écart entre la valeur mesurée et la valeur prédéfinie attendue représente alors une variation due à un autre phénomène, dont le plus probable est le gonflement des cellules (appelé « swelling » en anglais). Là encore par test ou par simulation, il est possible d'anticiper et de connaitre les différentes valeurs de la perte de charge Δp en fonction du gonflement des cellules.

Avantageusement, les capteurs de propriété comportent également un capteur de puissance 28 mesurant la puissance de la pompe du dispositif de pompe 16, et/ou, en variante, un capteur de courant mesurant la consommation électrique de la pompe. En effet, la puissance de la pompe varie pour compenser les pertes de charge du fluide de refroidissement, afin de garder le fluide à un flux constant.

Les capteurs de propriété sont reliés à un dispositif de surveillance 30, qui utilise les mesures obtenues par ces capteurs de propriété pour effectuer un suivi du vieillissement des cellules 13.

De manière optionnelle, le dispositif de surveillance 30 utilise également des données classiques, telles que les températures des cellules 13, leur puissance électrique, etc.

## Revendications

1. Dispositif de batterie (10) comportant au moins un module (12) de cellules (13), et un circuit de refroidissement (14) destiné faire circuler un fluide de refroidissement au contact des cellules (13), le dispositif de batterie (10) comprenant un dispositif (30) de surveillance des cellules (13), **caractérisé en ce que** le dispositif de surveillance (30) comporte au moins un capteur (22, 24, 26) de propriété du fluide de refroidissement.

2. Dispositif de batterie (10) selon la revendication 1, dans lequel l'au moins un capteur de propriété comporte, pour chaque module (12), un premier capteur (22) de pression et/ou de flux agencé sur le circuit de refroidissement (14), en sortie du module (12) correspondant.

3. Dispositif de batterie (10) selon la revendication 2, dans lequel l'au moins un capteur de propriété comporte, pour chaque module (12), un second capteur (24) de pression et/ou de flux agencé sur le circuit de refroidissement (14), en entrée du module (12) correspondant.

4. Dispositif de batterie (10) selon la revendication 2 ou 3, dans lequel le dispositif de surveillance (30) est configuré pour prendre en compte une perte de charge dans chaque module, déterminée en utilisant le premier capteur (22) correspondant.

5. Dispositif de batterie (10) selon l'une quelconque des revendications précédentes, dans lequel l'au moins un capteur de propriété comporte au moins un capteur de température (26) mesurant la température du fluide.

6. Dispositif de batterie (10) selon l'une quelconque des revendications précédentes, dans lequel le circuit de refroidissement (14) comporte une pompe (16), l'au moins un capteur de propriété comprenant un capteur (28) de puissance de la pompe (16) et/ou de courant électrique consommé par la pompe (16).

7. Procédé de surveillance des cellules d'un dispositif de batterie (10) selon l'une quelconque des revendications précédentes, **caractérisé en ce qu'**il utilise des mesures obtenues par l'au moins un capteur de propriété du fluide.

8. Procédé de surveillance selon la revendication 7, sur un dispositif de batterie (10) selon la revendication 3 ou 4, dans lequel le procédé de surveillance utilise une mesure de perte de charge entre une entrée et une sortie de chaque module (12), notamment en comparant cette mesure avec une perte de charge de référence obtenue pour une cellule en début de vie.

9. Procédé de surveillance selon la revendication 8, sur un dispositif de batterie (10) selon la revendication 5, dans lequel le procédé de surveillance prend en compte l'impact de la température du fluide sur la perte de charge.
